# EUROPÄISCHE PATENTSCHRIFT

(11) **EP 0 340 766 B1**
(45) Veröffentlichungstag und Bekanntmachung des Hinweises auf die Patenterteilung: **25.01.1995**
(21) Anmeldenummer: 89108051.7
(22) Anmeldetag: 03.05.1989
(51) Int. Cl.: G01F 1/60, G01F 1/58, G01F 1/56

(54) **Verfahren zur Kompensation vom im Elektrodenkreis einer magnetisch-induktiven Durchflussmesser-Anordnung auftretenden Störspannungen sowie Offset-Spannungen von dem Elektrodenkreis nachgeschalteten Verstärkerstufen**
Compensation method for noise voltage from the electrode circuit of a magneto-inductive flow meter and for offset voltage originating from the amplifier
Méthode de compensation pour les tensions de bruit apparaissant dans le circuit des électrodes d'un débitmètre à base induction magnétique et des tensions offset provenant de l'amplificateur intercalé à la suite dudit circuit

(30) Priorität: 04.05.1988 DE 3815190
(43) Veröffentlichungstag der Anmeldung: 08.11.1989
(73) Patentinhaber: Fischer & Porter GmbH, D-37079 Göttingen (DE)
(72) Erfinder: Marchewka, Werner, Dipl.-Ing., D-3433 Neu-Eichenberg (DE); Rackebrandt, Karl-Heinz, Dipl. Ing., D-3404 Adelebsen (DE); Schäfer, Klaus, Dipl.- Ing., D-3510 Hann-Münden (DE); Seebode, Albert, D-3405 Rosdorf 1 (DE)
(74) Vertreter: Fincke, Karl Theodor, Dipl.-Phys. Dr.

(56) Entgegenhaltungen:
- CH-A- 634 408
- CH-A- 655 794
- DE-A- 3 537 752

## Beschreibung

Die Erfindung betrifft ein Verfahren zur Kompensation von im Elektrodenkreis einer magnetisch-induktiven Durchflußmesser-Anordnung mit geschaltetem Gleichfeld auftretenden Störspannungen sowie von Offset-Spannungen von dem Elektrodenkreis nachgeschalteten Verstärkerstufen, bei dem während Korrekturintervallen von einer Meßspannung am Ausgang einer Verstärkerstufe eine Kompensationsspannung abgeleitet und während und zwischen den Korrekturintervallen der von den Elektroden stammenden Signalspannung am Eingang der Verstärkerstufe kompensierend hinzuaddiert wird.

Aus der DE-OS 31 32 471 ist ein Verfahren zur Kompensation von im Elektrodenkreis einer magnetisch-induktiven Durchflußmesser-Anordnung auftretenden Störspannungen sowie von Offset-Spannungen von dem Elektrodenkreis nachgeschalteten Verstärkerstufen bekannt. Bei diesem Verfahren wird die Signalspannung aus einem magnetisch-induktiven Elektrodenkreis, der von einem zu messenden Strömungsmedium durchflossen ist, zunächst verstärkt, wozu eine Eingangsverstärkerstufe sowie eine dieser nachgeschaltete Bereichsverstärkerstufe vorgesehen sein können. Die verstärkte Signalspannung wird am Ausgang der Verstärkerstufen durch Abtast- und Haltestufen in zwei Halbwellen-Abtastwerte bzw. Abtastspannungen aufgetrennt, die hinter den Abtast- und Haltestufen überlagert und sodann einem Signalauswertesystem zugeführt werden.

Bei einem derartigen Verfahren können Störspannungen auftreten, welche die Meßergebnisse verfälschen. Weiterhin verfälschen auch Offset-Spannungen der die Signalspannung verstärkenden Verstärkerstufen das Meßergebnis.

Um derartige Störspannungen zu kompensieren, ist es aus der DE-OS 31 32 471 bekannt, aus der verstärkten Signalspannung am Ausgang der Verstärkerstufen eine Kompensationsspannung abzuleiten und der Signalspannung zwischen der Eingangsverstärkerstufe und der Bereichsverstärkerstufe hinzuzuaddieren. Dabei wird die vom Ausgang der Verstärkerstufen abgeleitete Signalspannung einer Abtast- und Haltestufe zugeführt, welche von einem von den vorgenannten Halbwellen-Abtastwerten abgeleiteten Taktsignal wirksamgeschaltet wird. Die Abtast- und Haltestufe für die Kompensationsspannung wird je einmal pro Halbwelle der Signalspannung durch das Taktsignal wirksamgeschaltet, d.h. in jeder Halbwelle der Signalspannung erfolgt jeweils eine Abtastung der Kompensationsspannung. Damit ist pro Abtastung in den Halbwellen der Signalspannung jeweils ein Abtastintervall und ein Korrekturintervall vorhanden.
Jeder Halbwellen-Abtastwert ist daher von der Störspannung befreit, sofern diese innerhalb einer Periode der Signalspannung konstant ist.

Nachteilig bei diesem Verfahren ist noch, daß über die für die Signalabtastung notwendige Zeit noch eine Zeit für die Kompensation vorhanden sein muß.

Der vorliegenden Erfindung liegt die Aufgabe zugrunde, ein Verfahren eingangs genannter Art anzugeben, bei dem der Zeitaufwand zur Kompensation verringert ist und somit für die Signalabtastung mehr Zeit zur Verfügung steht.

Zur Lösung dieser Aufgabe ist das Verfahren eingangs genannter Art dadurch gekennzeichnet, daß jedes Korrekturintervall schwellwertabhängig solange andauert, wie die Meßspannung einen vorgegebenen Schwellwert übersteigt.

Die vorliegende Erfindung beruht dabei auf dem Gedanken, daß eine Kompensation von Stör- und Offset-Spannungen nur dann erforderlich wird, wenn die genannten Spannungen zur Übersteuerung der Verstärkerstufen bzw. des Signalauswertesystems und damit zu einer fehlerhaften Signalauswertung führen. Vorhandene Stör- und Offset-Spannungen, die eine Kompensation nicht erforderlich machen, werden innerhalb des Signalauswertesystems ermittelt und eliminiert. Damit sind neben der Signalabtastung keine weiteren Abtastintervalle innerhalb einer Meßperiode erforderlich, wenn eine vollständige Kompensation der Stör- und Offsetspannungen nicht zwingend notwendig ist.

Weiterbildungen der Erfindung sind Gegenstand von Unteransprüchen.

Die Erfindung wird im folgenden anhand von in den Figuren der Zeichnung dargestellten Ausführungsbeispielen näher erläutert. Es zeigt:
- Fig. 1: ein schematisches Blockschaltbild einer Schaltungsanordnung zur Durchführung des erfindungsgemäßen Verfahrens;
- Fig. 2: ein Diagramm von in der Schaltungsanordnung nach Fig. 1 auftretenden Signalen;
- Fig. 3, 5 und 7: jeweils ein Blockschaltbild von abgewandelten Teilen der Schaltungsanordnung nach Fig. 1; und
- Fig. 4 und 6: jeweils ein Signaldiagramm von in den Ausführungsformen nach den Fig. 3, 5 und 7 auftretenden Signalen.

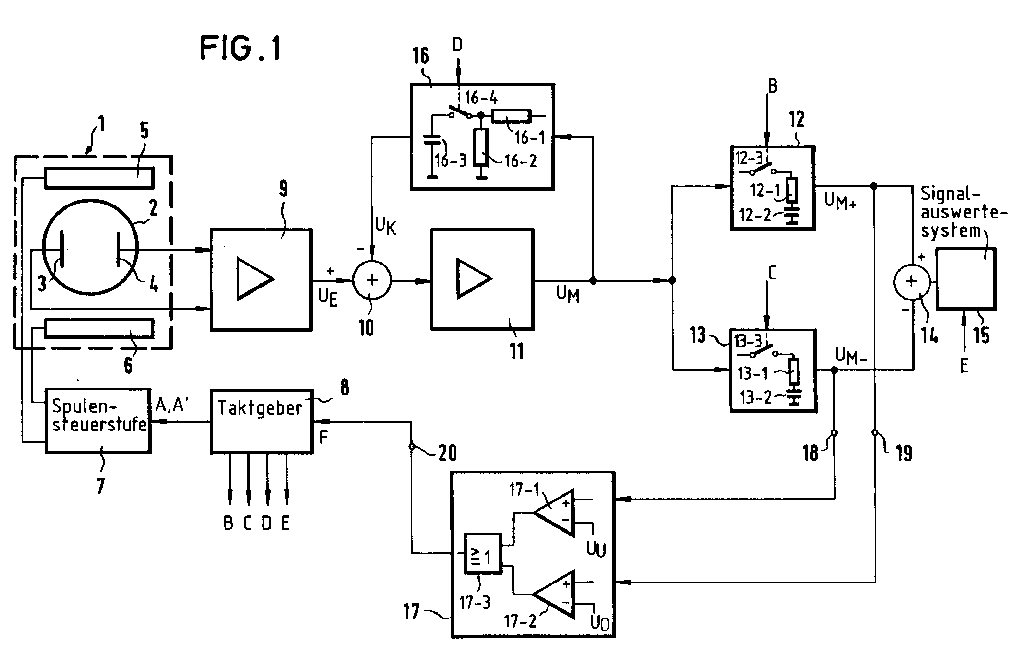

In der Durchflußmesser-Anordnung nach Fig. 1 ist mit 1 schematisch ein Elektrodenkreis bezeichnet, der ein isoliertes Rohr 1 aufweist, durch das ein zu messendes Strömungsmedium senkrecht zur Zeichenebene strömt. Im Rohr 2 sind zwei Elektroden 3 und 4 vorgesehen, an denen eine induzierte Spannung abgegriffen werden kann, die ein Maß für die Durchflußgeschwindigkeit des Strömungsmediums im Rohr 2 ist. Zu beiden Seiten des Rohres 2 sind Spulenhälften 5 und 6 vorgesehen, welche ein das Rohr 2 durchsetzendes Magnetfeld erzeugen, das zur Induzierung der Spannung an den Elektroden 3 und 4 im vorgenannten Sinne führt.

Die an den Elektroden 3 und 4 auftretende Spannung wird in einen Eingangsverstärker 9 eingespeist, der an seinem Ausgang eine Signalspannung U_{E} liefert. Über eine im folgenden noch zu erläuternde Summationsstufe 10 wird die Signalspannung U_{E} einem Bereichsverstärker 11 zugeführt, der an seinem Ausgang eine Meßspannung U_{M} liefert. Diese Meßspannung wird in zwei Abtast- und Haltestufen 12 und 13 in zwei Halbwellen-Abtastwerte U_{M+} und U_{M-} zerlegt. Wie schematisch angedeutet, enthalten diese Abtast- und Haltestufen 12 und 13 jeweils ein RC-Glied 12-1, 12-2 bzw. 13-1, 13-2 mit einem Speicherkondensator 12-2 bzw. 13-2. Die Meßspannung U_{M} wird über jeweils einen Schalter 12-3 bzw. 13-3 in das jeweilige RC-Glied getastet, wobei der jeweilige Schalter durch ein Taktsignal B bzw. C von einem Taktgeber 8 gesteuert wird.

Die Halbwellen-Abtastwerte U_{M+} und U_{M-} werden in einer Summationsstufe 14 überlagert und in ein Signalauswertesystem 15 eingespeist, das durch ein Taktsignal E vom Taktgeber 8 getaktet wird.

Der Taktgeber 8 liefert weiterhin ein Taktsignal A oder A′, das über eine Spulensteuerstufe in die Spulenhälften 5 und 6 des Elektrodenkreises 1 eingespeist wird.

Zur Kompensation von Störspannungen aus dem Elektrodenkreis 1 sowie von Offset-Spannungen der Verstärkerstufen 9 und 11 wird von der Meßspannung U_{M} am Ausgang der Verstärkerstufe 11 über eine Abtast- und Haltestufe 16 eine Kompensationsspannung U_{K} erzeugt, welche in der Summationsstufe 10 der Eingangsspannung U_{E} kompensierend hinzuaddiert wird. Die Abtast- und Haltestufe 16 enthält, wie schematisch dargestellt, einen Spannungsteiler aus Widerständen 16-1, 16-2, der über einen Schalter 16-4 an einen Speicherkondensator 16-3 angekoppelt ist. Der Schalter 16-4 wird dabei über ein Taktsignal vom Taktgeber 8 gesteuert.

Erfindungsgemäß ist nun vorgesehen, daß die Kompensationsspannung U_{K} schwellwertabhängig solange erzeugt wird, wie die Meßspannung U_{M} bzw. die Halbwellen-Abtastwerte U_{M+}, U_{M-} einen vorgegebenen Schwellwert übersteigen. Dazu werden die Halbwellen-Abtastwerte in eine Stufe 17 eingespeist, die bei Überschreiten zweier Grenzwerte U_{U} und U_{O} für die beiden Halbwellen-Abtastwerte U_{M+}, U_{M-} ein Steuersignal F für den Taktgeber 8 liefert, der als Funktion dieses Steuersignals, insbesondere das Taktsignal D für die die Kompensationsspannung U_{K} liefernde Abtast- und Haltestufe 16 liefert. In der Stufe 17 sind Komparatoren 17-1, 17-2 vorgesehen, welche die Schwellwerte U_{O}, U_{U} mit den Halbwellen-Abtastwerten U_{M+}, U_{M-} vergleichen. Die Ausgangssignale der Komparatoren 17-1, 17-2 werden über eine ODER-Gatter 17-3 als Steuersignal F in den Taktgeber 8 eingespeist.

Erfindungswesentlich ist also, daß eine Kompensation durch die Kompensationsspannung U_{K} nur solange erfolgt, d.h., das Korrekturintervall dauert nur solange an, als die Halbwellen-Abtastwerte U_{M+}, U_{M-} außerhalb der durch die Schwellwerte U_{O}, U_{U} liegenden Grenzen liegen. Ergibt sich innerhalb des Korrekturintervalls eine Änderung der Stör- bzw. Offsetspannungen, so sind die Halbwellen-Abtastwerte U_{M+}, U_{M-} am Ende des Korrekturintervalls nicht vollständig auf Null kompensiert. Die nachfolgenden Halbwellen-Abtastwerte U_{M+} und U_{M-} werden aber in der Regel innerhalb der Grenzen U_{O} und U_{U} liegen. Ist dies nicht der Fall, so beginnt ein neues Korrekturintervall.

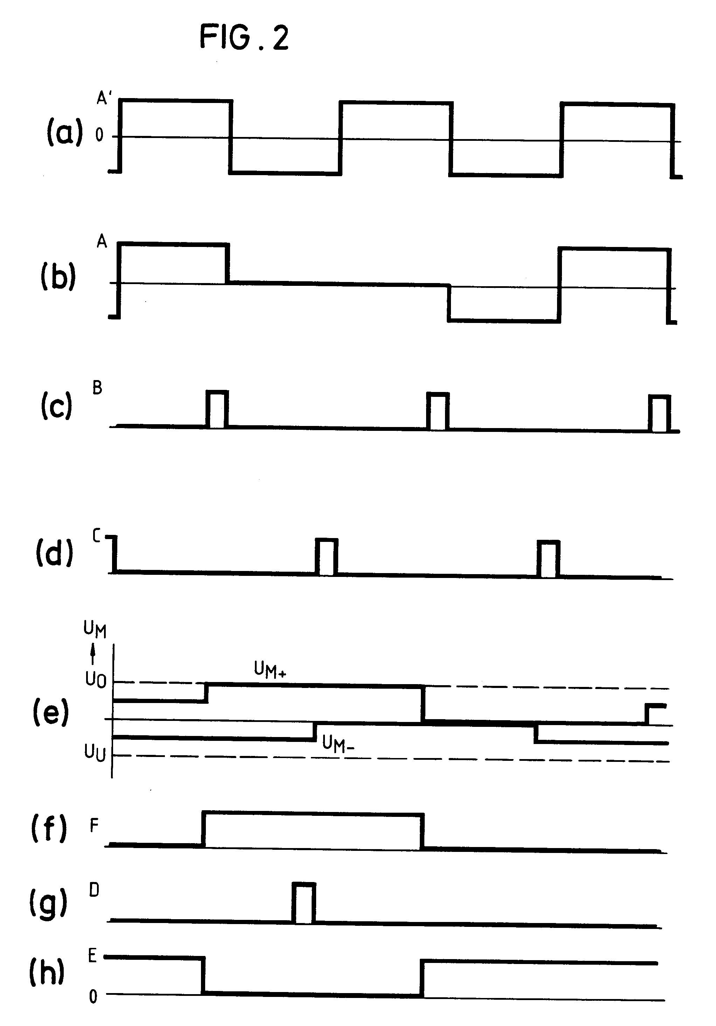

Die Signalverläufe innerhalb der Schaltungsanordnung nach Fig. 1 sind in den Signaldiagrammen gemäß Fig. 2 (a) bis (h) dargestellt. Da die jeweiligen Signale in den Diagrammen nach Fig. 2 ebenso wie die Signale in Fig. 1 bezeichnet sind, brauchen die Signaldiagramme nach Fig. 2 nicht eigens erläutert werden. Es sei lediglich darauf hingewiesen, daß in Fig. 2 (a) das vom Taktgeber 8 gemäß Fig. 1 in die Spulensteuerstufe 7 eingespeiste Signal A′ für den Fall gilt, daß bei wirksamer Kompensationsspannung U_{K} das Magnetfeld im Elektrodenkreis 1 nicht abgeschaltet wird, während das Signal A nach Fig. 2 (b) für den Fall gilt, daß das Magnetfeld im Elektrodenkreis 1 bei wirksamer Kompensationsspannung U_{K} abgeschaltet wird.

Bei der Durchflußmesser-Anordnung nach Fig. 1 können die Schwellwerte U_{O}, U_{U} konstant sein oder in Anpassung an die Verhältnisse im Elektrodenkreis 1 und daraus zu erwartender Störsignale variabel sein.

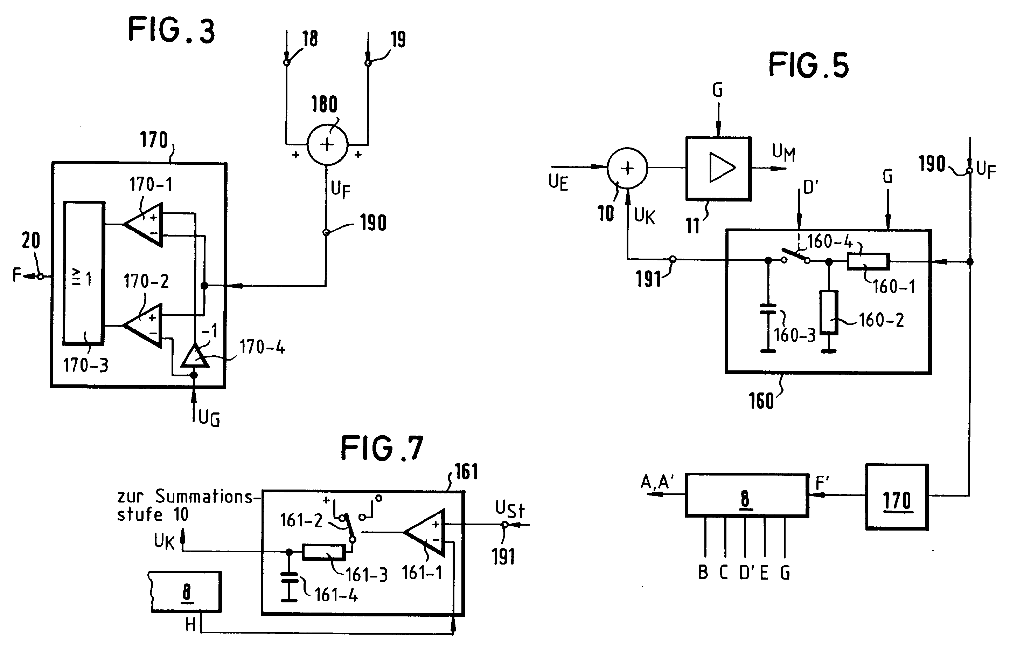

Fig. 3 zeigt ein Teilblockschaltbild einer abgewandelten Ausführungsform der Durchflußmesser-Anordnung nach Fig. 1. Diejenigen Teile der Anordnung, welche sich gegenüber der Anordnung nach Fig. 1 nicht ändern, sind in Fig. 3 nicht dargestellt.

In der Anordnung nach Fig. 3 werden die Halbwellen-Abtastwerte U_{M+}, U_{M-} an in Fig. 1 ebenfalls dargestellten Schaltungspunkten 18 und 19 einer Summationsstufe 180 zugeführt, welche eine Fehlerspannung U_{F} aus den Halbwellen-Abtastwerten erzeugt. Diese Fehlerspannung U_{F} wird in eine Stufe 170 eingespeist, der weiterhin eine Grenzwertspannung U_{G} zugeführt wird. Die Stufe 170 enthält wiederum Komparatoren 170-1, 170-2 mit einem nachgeschalteten ODER-Gatter 170-3. Die Fehlerspannung U_{F} wird im dargestellten Sinne direkt in die Komparatoren 170-1, 170-2 eingespeist, während die Grenzwertspannung U_{G} über einen Inverter 170-4 im dargestellten Sinn in die Komparatoren 170-1, 170-2 eingespeist wird.

Über die Ausführungsform nach Fig. 1 hinaus kann bei der Ausführungsform nach Fig. 3 ein Grenzwert für den Betrag der Stör- und Offset-Spannungen unabhängig von der Signalspannung gewählt werden. Die Grenzwertspannung U_{G} ist dabei in Abhängigkeit vom Durchfluß in der Elektrodenanordnung 1 und den Stör- und Offsetspannungen wählbar und für beide Polaritäten der Meßspannung U_{M} gültig. Das Korrekturintervall beginnt, wenn die Fehlerspannung U_{F} den Schwellwert übersteigt und das Steuersignal F an einem in Fig. 1 ebenfalls dargestellten Schaltungspunkt 20 für den Taktgeber 8 den zur Erzeugung des Taktsignals D für die Kompensationsspannung U_{K} erforderlichen Wert annimmt. Der zeitliche Verlauf des Korrekturintervalls entspricht demjenigen der Anordnung nach Fig. 1.

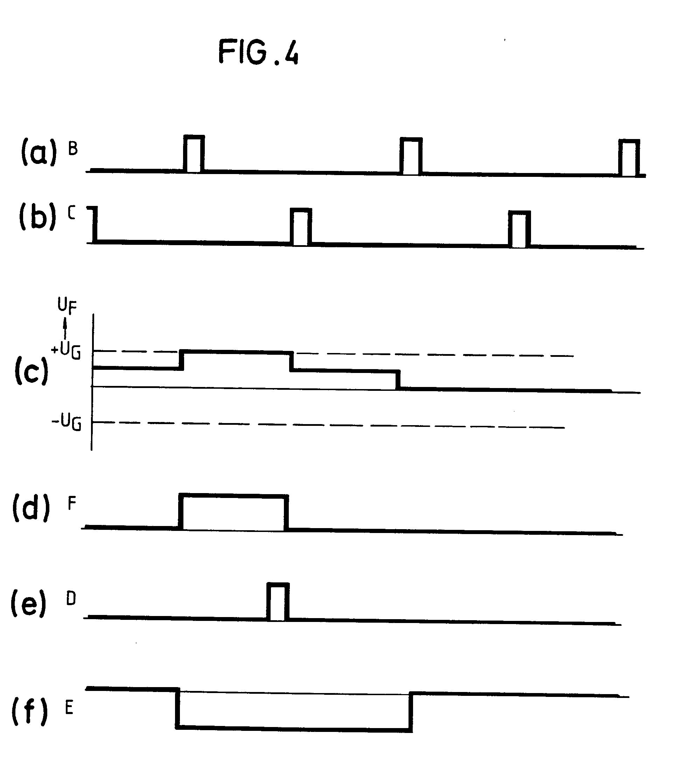

Die Signalverläufe für die Anordnung nach Fig. 3 sind in den Signaldiagrammen gemäß Fig. 4 (a) bis (f) dargestellt, wobei in den Fig. 3 und 4 die Signale wiederum mit gleichen Bezugszeichen versehen sind, so daß sich ein detailliertes Eingehen auf die Diagramme nach Fig. 4 erübrigt.

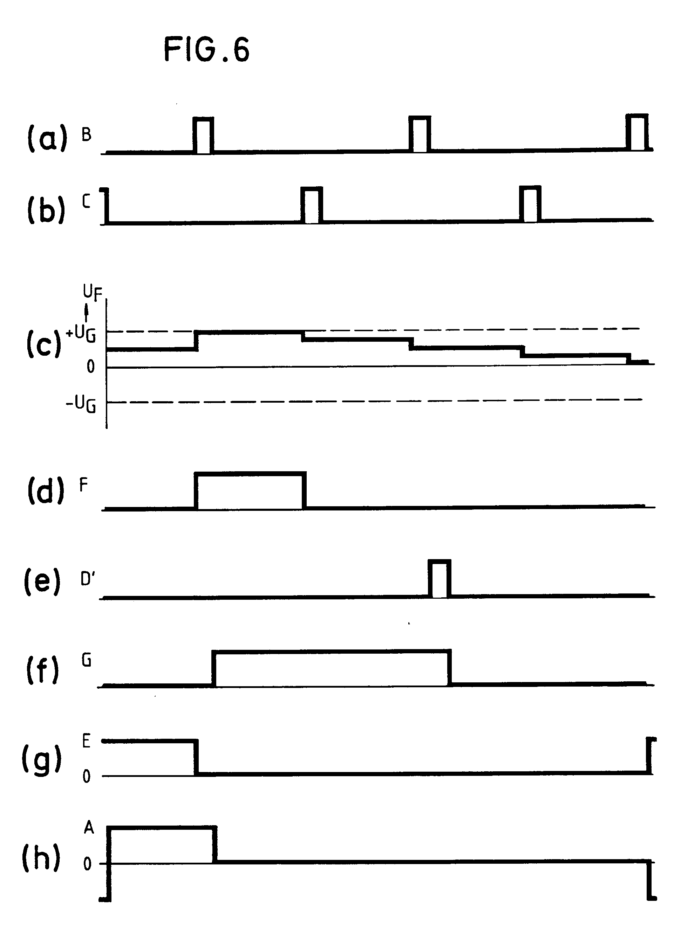

Fig. 5 zeigt ein Teil-Blockschaltbild einer weiteren Ausführungsform, wobei ebenfalls die in den Anordnungen nach Fig. 1, 3 und 5 gleichen Komponenten, welche zur Erläuterung der Anordnung nach Fig. 5 nicht erforderlich sind, nicht dargestellt sind.

Bei der Anordnung nach Fig. 5 wird die Kompensationsspannung U_{K} von der Fehlerspannung U_{F} an einem in Fig. 3 ebenfalls dargestellten Schaltungspunkt 190 hinter der Summationsstufe 180 abgeleitet. Wesentlich ist hierbei, daß als Funktion eines Steuersignals F′ von der Stufe 170 mit der in Fig. 3 dargestellten Ausgestaltung durch den Taktgeber 8 ein weiteres Taktsignal G erzeugt wird, das in den Bereichsverstärker 11 sowie in eine die Fehlerspannung U_{F} aufnehmende Abtast- und Haltestufe 160 mit Elementen 160-1 bis 160-4 entsprechend der Abtast- und Haltestufe 16 nach Fig. 1 eingespeist wird. Der Schalter 160-4 der Abtast- und Haltestufe 160 wird entsprechend der Ausführungsform nach Fig. 1 durch ein Taktsignal D′ vom Taktgeber 8 gesteuert.

Wesentlich für diese Ausführungsform ist, daß über das Taktsignal G die Verstärkung im Meßspannungs-Verstärkerkreis und im Kompensationsspannungskreis an die gegebenen Verhältnisse der Stör- und Offset-Spannungen angepaßt werden kann. Werden im Bereichsverstärker 11 und in der Abtast- und Haltestufe 160 ein die Verstärkung herabsetzender Teilerfaktor vorgesehen, so kann eine Anpassung an große Änderungen der Stör- und Offset-Spannungen vorgenommen werden, welche sonst zu einer Übersteuerung der Abtast- und Haltestufen 12 und 13 gemäß Fig. 1 führen würden. Damit kann die Kompensationsspannung U_{K} durch Wahl der Verstärkung herabgesetzt werden. Wird die Verstärkung des Bereichsverstärkers 11 um den Teilerfaktor herabgesetzt, so muß in der Abtast- und Haltestufe 160 die Verstärkung um den Teilerfaktor heraufgesetzt werden.

Zur Erläuterung wird bemerkt:

Liegt ein großes Störsignal vor, welches zur Übersteuerung der Abtast- und Haltestufen 12, 13 führt, so wird die Fehlerspannung U_{F} am Schaltungspunkt 190 bzw. in der Summationsstufe 180 nicht korrekt gebildet: sie wird zu klein.

Durch Herabsetzen der Verstärkung des Bereichsverstärkers 11 werden die Abtast- und Haltestufen 12, 13 nicht mehr übersteuert. Die Fehlerspannung U_{F} am Punkt 190 ist jedoch um den Teilerfaktor verringert und muß entsprechend dem Teilerfaktor in der Abtast- und Haltestufe 160 wieder heraufgesetzt werden, damit die Kompensationsspannung U_{K} nach dem Kompensationsintervall die erforderliche Amplitude hat.

Da die Kompensationsspannung U_{K} bei dieser Ausführungsform unmittelbar von der Fehlerspannung U_{F} abgeleitet wird, sind für das Korrekturintervall zwei Perioden des Meßsignals erforderlich, da nach Überschreiten des Schwellwertes die neuen Meßwerte in die Abtast- und Haltestufen 12 und 13 übernommen werden müssen.

Für diese Ausführungsform sind die entsprechenden Signalverläufe in den Diagrammen nach Fig. 6 (a) bis (h) dargestellt, wobei wiederum die Signale in den Fig. 5 und 6 mit gleichen Bezugszeichen versehen sind.

Fig. 7 zeigt schließlich einen Teil einer Ausführungsform entsprechend der Ausführungsform nach Fig. 5, wobei jedoch der Abtast- und Haltestufe 160 eine Stufe 161 mit einem Komparator 161-1, einem Umschalter 161-2 sowie einem RC-Glied 161-3, 161-4 nachgeschaltet ist. Diese Stufe 161 arbeitet als Pulsbreitenmodulator mit nachgeschaltetem Tiefpaß.

Dieser Stufe 161 wird vom Taktgeber 8 eine Sägezahnspannung H mit gegen die Meßspannungsfrequenz großer Frequenz sowie ein Steuersignal U_{St} von der Abtast- und Haltestufe 160 gemäß Fig. 5 an einem ebenfalls in Fig. 5 dargestellten Schaltungspunkt 191 zugeführt. Aus diesen beide Spannungen H und U_{St} wird eine pulsbreitenmodulierte Kompensationsspannung U_{K} erzeugt, die sich in Abhängigkeit von der Steuerspannung U_{St} so einstellt, daß die Stör- und Offset-Spannungen zu Null kompensiert werden.

Für die Ausführungsform nach Fig. 7 gelten die Signaldiagramme nach Fig. 6 (a) bis (h) entsprechend.

Das Taktsignal E signalisiert dem Signalauswertesystem 15 das Kompensationsintervall, in dem keine gültigen Meßwerte vorliegen. Gleichzeitig kann das Taktsignal E Informationen über die Qualität der Signalspannung liefern.

## Patentansprüche

1. Verfahren zur Kompensation von im Elektrodenkreis (1) einer magnetisch-induktiven Durchflußmesser-Anordnung mit geschaltetem Gleichfeld auftretenden Störspannungen sowie von Offset-Spannungen von dem Elektrodenkreis (1) nachgeschalteten Verstärkerstufen (9, 11), bei dem während Korrekturintervallen von einer Meßspannung (U_{M}; U_{M+}, U_{M-}) am Ausgang einer Verstärkerstufe (11) ein Kompensationsspannung (U_{K}) abgeleitet und während und zwischen den Korrekturintervallen der von den Elektroden stammenden Signalspannung (U_{E}) am Eingang der Verstärkerstufe (11) kompensierend hinzuaddiert wird,
**dadurch gekennzeichnet**,
daß jedes Korrekturintervall schwellwertabhängig solange andauert, wie die Meßspannung (U_{M}; U_{M+}, U_{M-}) einen vorgegebenen Schwellwert übersteigt.

2. Verfahren nach Anspruch 1,
**dadurch gekennzeichnet**,
daß die Kompensationsspannung (U_{K}) direkt vom Ausgang der Verstärkerstufe (11) abgeleitet und von einem aus Halbwellen-Abtastwerten (U_{M+}, U_{M-}) der Meßspannung (U_{M}) sowie Schwellwerten (Uₒ, U_{U}) für die Abtastwerte abgeleiteten Taktsignal (D) wirksamgeschaltet wird.

3. Verfahren nach Anspruch 1,
**dadurch gekennzeichnet**,
daß die Kompensationsspannung (U_{K}) direkt vom Ausgang der Verstärkerstufe (11) abgeleitet wird, daß aus Halbwellen-Abtastwerten (U_{M+}, U_{M-}) der Meßspannung (U_{M}) eine Fehlerspannung (U_{F}) erzeugt wird und daß die Kompensationsspannung (U_{K}) durch ein aus der Fehlerspannung (U_{F}) und einer Grenzwertspannung (U_{G}) abgeleitetes Taktsignal (D) wirksamgeschaltet wird.

4. Verfahren nach Anspruch 1,
**dadurch gekennzeichnet**,
daß die Kompensationsspannung (U_{K}) indirekt vom Ausgang der Verstärkerstufe, und zwar aus einer aus Halbwellen-Abtastwerten (U_{M+}, U_{M-}) der Meßspannung (U_{M}) erzeugten Fehlerspannung (U_{F}) abgeleitet und durch ein aus der Fehlerspannung (U_{F}) und einer Grenzwertspannung (U_{G}) abgeleitetes Taktsignal (D′) wirksamgeschaltet wird.

5. Verfahren nach Anspruch 4,
**dadurch gekennzeichnet**,
daß aus einer in einem Taktgeber (8) erzeugten Sägezahnspannung (H) mit gegen die Meßspannungsfrequenz großer Frequenz und einer aus der Fehlerspannung (U_{F}) abgeleiteten Steuerspannung (U_{St}) eine pulsweitenmodulierte Kompensationsspannung (U_{K}) erzeugt wird.

6. Verfahren nach Anspruch 4 und 5,
dadurch **gekennzeichnet**, daß die Verstärkung im Kompensations-Spannungskreis und im Meßspannungs-Verstärkerkreis durch ein aus der Fehlerspannung (U_{F}) abgeleitetes Taktsignal (G) einstellbar sind.

7. Verfahren nach einem der Ansprüche 1 bis 6,
dadurch **gekennzeichnet**, daß die Schwellwerte (U_{O}, U_{U}) und die Grenzwertspannung (U_{G}) konstant sind.

8. Verfahren nach einem der Ansprüche 1 bis 6,
dadurch **gekennzeichnet**, daß die Schwellwerte (U_{O}, U_{U}) und die Grenzwertspannung (U_{G}) in Anpassung an die Verhältnisse im Elektrodenkreis (1) und daraus zu erwartender Störsignale variabel sind.

9. Verfahren nach einem der Ansprüche 1 bis 8,
dadurch **gekennzeichnet**, daß bei wirksamer Kompensationsspannung (U_{K}) das Magnetfeld im Elektrodenkreis (1) abgeschaltet wird.

10. Verfahren nach einem der Ansprüche 1 bis 8,
dadurch **gekennzeichnet**, daß bei wirksamer Kompensationsspannung (U_{K}) das Magnetfeld im Elektrodenkreis (1) eingeschaltet bleibt.

## Claims

1. Method of compensating for noise voltage occurring in the electrode circuit (1) of a magnetic-induction flow meter arrangement with a constant field connected thereto, and for compensating offset voltages from the amplifier stages (9, 11) connected beyond the electrode circuit (1), wherein, during correction intervals, a compensatory voltage (U_{K}) is derived from a measured voltage (U_{M}; U_{M+}, U_{M-}) at the output of an amplifier stage (11) and during and between the correction intervals it is added in compensating manner to the signal voltage (U_{E}) originating from the electrodes at the input of the amplifier stage (11), characterised in that each correction interval lasts, depending on the threshold value, as long as the measured voltage (U_{M}; U_{M+}, U_{M-}) exceeds a given threshold value.

2. Method according to claim 1, characterised in that the compensating voltage (U_{K}) is derived directly from the output of the amplifier stage (11) and is rendered operative by a timing signal (D) derived from halfwave scanned values (U_{M+}, U_{M-}) for the measured voltage (U_{M}) and threshold values (U_{O}, U_{U}) for the scanned values.

3. Method according to claim 1, characterised in that the compensating voltage (U_{K}) is derived directly from the output of the amplifier stage (11), in that a defective voltage (U_{F}) is generated from halfwave scanned values (U_{M+}, U_{M-}) for the measured voltage (U_{M}) and in that the compensating voltage (U_{K}) is rendered operative by a timing signal (D) derived from the defective voltage (U_{F}) and a limiting value voltage (U_{G}).

4. Method according to claim 1, characterised in that the compensating voltage (U_{K}) is derived indirectly from the output of the amplifier stage, specifically from a defective voltage (U_{F}) generated from halfwave scanned values (U_{M+}, U_{M-}) of the measured voltage (U_{M}) and is rendered operative by a timing signal (D′) derived from the defective voltage (U_{F}) and a limiting voltage (U_{G}).

5. Method according to claim 4, characterised in that a pulse width-modulated compensating voltage (U_{K}) is generated from a saw-tooth voltage (H) generated in a timer (8) having a high frequency against the measured voltage frequency and a control voltage (U_{St}) derived from the defective voltage (U_{F}).

6. Method according to claims 4 and 5, characterised in that the amplification in the compensating voltage circuit and in the measured voltage amplifying circuit can be adjusted by means of a timing signal (G) derived from the defective voltage (U_{F}).

7. Method according to one of claims 1 to 6, characterised in that the threshold values (U_{O}, U_{U}) and the limiting voltage (U_{G}) are constant.

8. Method according to one of claims 1 to 6, characterised in that the threshold values (U_{O}, U_{U}) and the limiting voltage (U_{G}) are variable so as to adapt to the conditions in the electrode circuit (1) and any noise signals to be expected therefrom.

9. Method according to one of claims 1 to 8, characterised in that when the compensating voltage (U_{K}) is operative the magnetic field in the electrode circuit (1) is switched off.

10. Method according to one of claims 1 to 8, characterised in that, when the compensating voltage (U_{K}) is operative, the magnetic field in the electrode circuit (1) remains switched on.

## Revendications

1. Procédé de compensation de tensions de bruit ou perturbatrices apparaissant dans le circuit des électrodes (1) d'un débitmètre à induction magnétique auquel est raccordé un champ de courant continu ainsi que de tensions offset provenant des étages amplificateurs (9, 11) montés en aval du circuit des électrodes (1), dans lequel une tension de compensation (U_{K}) est dérivée pendant les intervalles de correction d'une tension de mesure (U_{M}; U_{M+}, U_{M-}) à la sortie d'un étage amplificateur (11), et la tension du signal (U_{E}) provenant des électrodes est ajoutée de façon compensatrice à l'entrée de l'étage amplificateur (11) pendant et entre les intervalles de correction, caractérisé en ce que chaque intervalle de correction dure en fonction d'une valeur de seuil aussi longtemps que la tension de mesure (U_{M}; U_{M+}, U_{M-}) dépasse une valeur de seuil prédéterminée.

2. Procédé selon la revendication 1, caractérisé en ce que la tension de compensation (U_{K}) est dérivée directement de la sortie de l'étage amplificateur (11) et est rendue active par un signal d'horloge (D) dérivé des valeurs d'exploration de demi-ondes (U_{M+}, U_{M-}) de la tension de mesure (U_{M}) ainsi que des valeurs de seuil (U_{O}, U_{U}) des valeurs d'exploration.

3. Procédé selon la revendication 1, caractérisé en ce que la tension de compensation (U_{K}) est dérivée directement de la sortie de l'étage amplificateur (11) de manière que soit produite à partir des valeurs d'exploration de demi-ondes (U_{M+}, U_{M-}) de la tension de mesure (U_{M}) une tension de défaut (U_{F}), et en ce que la tension de compensation (U_{K}) est rendue active par un signal d'horloge (D) dérivé de la tension de défaut (U_{F}) et d'une tension de valeur de seuil (U_{G}).

4. Procédé selon la revendication 1, caractérisé en ce que la tension de compensation (U_{K}) est dérivée indirectement de la sortie de l'étage amplificateur, et en fait d'une tension de défaut (U_{F}) produite à partir de valeurs d'exploration de demi-ondes (U_{M+}, U_{M-}) de la tension de mesure (U_{M}), et est rendue active par un signal d'horloge (D′) dérivé de la tension de défaut (U_{F}) et d'une tension de valeur limite (U_{G}).

5. Procédé selon la revendication 4, caractérisé en ce qu'une tension de compensation à modulation de largeur d'impulsion (U_{K}) est produite à partir d'une tension en dents de scie (H) produite dans un générateur d'horloge (8) et présentant une fréquence plus élevée que la fréquence de la tension de mesure et une tension de commande (U_{St}) dérivée de la tension de défaut (U_{F}).

6. Procédé selon les revendications 4 et 5, caractérisé en ce que l'amplification du circuit de tension de compensation et celle du circuit amplificateur de la tension de mesure peuvent être réglées à partir d'un signal d'horloge (G) dérivé de la tension de défaut (U_{F}).

7. Procédé selon l'une quelconque des revendications 1 à 6, caractérisé en ce que les valeurs de seuil (U_{O}, U_{U}) et la tension de valeur limite (U_{G}) sont constantes.

8. Procédé selon l'une quelconque des revendications 1 à 6, caractérisé en ce que les valeurs de seuil (U_{O}, U_{U}) et la tension de valeur limite (U_{G}) sont variables en étant adaptées aux conditions régnant dans le circuit d'électrodes (1) et aux signaux perturbateurs qui en découlent.

9. Procédé selon l'une quelconque des revendications 1 à 8, caractérisé en ce que le champ magnétique du circuit d'électrodes (1) est coupé quand la tension de compensation (U_{K}) est active.

10. Procédé selon l'une quelconque des revendications 1 à 8, caractérisé en ce que le champ magnétique dans le circuit d'électrodes (1) reste branché quand la tension de compensation (U_{K}) est active.
